# EUROPÄISCHE PATENTSCHRIFT

(11) **EP 1 321 018 B1**
(45) Veröffentlichungstag und Bekanntmachung des Hinweises auf die Patenterteilung: **23.01.2008**
(21) Anmeldenummer: 02102743.8
(22) Anmeldetag: 12.12.2002
(51) Int. Cl.: A01B 73/06, A01C 7/08

(54) **Landwirtschaftlicher Geräterahmen**
Agricultural machine frame
Bâti pour machine agricole

(30) Priorität: 18.12.2001 US 21643
(43) Veröffentlichungstag der Anmeldung: 25.06.2003
(73) Patentinhaber: DEERE & COMPANY, Moline, Illinois 61265-8098 (US)
(72) Erfinder: Meyer, Bradley, John, Davenport, IA 52806 (US); Hall, Thomas, LeRoy, Davenport, IA 52806 (US); Bennett, Robert, Edwin, Moline, IL 61265 (US); Clark, Richard, Hugo, Geneseo, IL 61254 (US); Graham, William, Douglas, East Moline, IL 61244 (US)
(74) Vertreter: Holst, Sönke

(56) Entgegenhaltungen:
- EP-A- 0 612 464
- WO-A-97/16953
- DE-A- 4 326 125
- DE-A- 19 954 423
- US-A- 4 214 637
- US-A- 4 721 168
- US-A- 5 406 897
- US-B1- 6 202 756

## Beschreibung

Die Erfindung betrifft eine Sämaschine mit einem Hauptrahmen, der eine vordere Reihe und eine hintere Reihe an Pflanzeinheiten umfasst, einem linken Flügelrahmen sowie einem rechten Flügelrahmen, die schwenkbar mit dem Hauptrahmen verbunden sind, so dass sie von einer Arbeitskonfiguration in eine Transportkonfiguration verschwenkbar sind, und einem Saatgutbehälter zur Aufnahme von Saatgut, wobei die Flügelrahmen mit einer vorderen Reihe und einer hinteren Reihe an Pflanzeinheiten ausgestattet sind.

Landwirtschaftliche Geräte, wie Sämaschinen, haben eine breite, sich quer zur Fahrtrichtung erstreckende Arbeitskonfiguration, so dass die Maschine bei einer einzigen Überfahrt eine möglichst große Bodenfläche abdeckt. Die Sämaschine kann typischer Weise aus ihrer Arbeitskonfiguration in eine besser handhabbare Transportkonfiguration gefaltet werden.

Manche Sämaschinen sind mit einem Rahmen ausgestattet, der ein mittiges Hauptrahmensegment und zwei Flügelrahmensegmente umfasst. Das mittige Hauptrahmensegment ist mit einer sich nach vorn erstreckenden Zugstange oder Deichsel zum Ankoppeln der Maschine an einen Traktor ausgestattet. Die Flügelrahmensegmente sind an sich von vorn nach hinten erstreckende Achsen an den Hauptrahmen gekoppelt, so dass die Flügel sich gegenüber dem Hauptrahmen bewegen können, um es den Flügelrahmensegmenten zu erlauben, den Konturen des Bodens näher zu folgen. Einzelne Pflanzeinheiten sind an den Rahmensegmenten durch Parallelogrammlenker befestigt, so dass die Pflanzeinheiten sich gegenüber dem jeweiligen Rahmensegment um einen begrenzten Betrag nach oben und unten bewegen können. Ein Verfahren zum Falten des Rahmens der oben beschriebenen Sämaschine ist, die Flügel nach vorn entlang der Zugstange zu falten.

Um näher beabstandete Reihen zu pflanzen, ist es bekannt, die Pflanzeinheiten alternierend anzuordnen. Alle Pflanzeinheiten können verwendet werden, um eine Gutart in engen Reihen zu pflanzen, oder auswählbare Pflanzeinheiten können angehoben werden, um eine Gutart in weiteren Reihen zu pflanzen.

Es ist auch bekannt, Pflanzeinheiten auf ihren Nasen aus einer horizontalen Pflanzposition in eine vertikalere Nicht-Pflanzposition zu verschwenken.

Die DE 43 26 125 A beschreibt eine Sämaschine mit einem Rahmen, der sich aus drei seitlich nebeneinander angeordneten Abschnitten zusammensetzt. Die äußeren Rahmenabschnitte sind um horizontal und parallel zur Vorwärtsrichtung verlaufende Achsen um 90° gegenüber dem mittleren Rahmenabschnitt in eine Transportstellung verschwenkbar. An den Rahmenabschnitten sind mehrere Säeinheiten in Vorwärtsrichtung hintereinander starr angebracht. Bei gegebener Transportbreite und -höhe ist die Arbeitsbreite der Sämaschine deshalb relativ gering.

Die US 6 202 756 B schlägt eine andere Sämaschine vor, die einen Rahmen umfasst, der sich aus zwei seitlich nebeneinander angeordneten Abschnitten zusammensetzt, die an den Seiten eines mittleren Abschnitts angebracht sind. Die äußeren Rahmenabschnitte sind um vertikal verlaufende Achsen um 90° nach vorn in eine Transportstellung verschwenkbar. An den Rahmenabschnitten sind mehrere Säeinheiten um parallel zu den Rahmenabschnitten verlaufende Achsen schwenkbar angelenkt. Alle Säeinheiten werden in der Transportstellung nach oben verschwenkt.

Die der Erfindung zu Grunde liegende Aufgabe wird darin gesehen, einen verbesserten faltbaren Rahmen für ein landwirtschaftliches Gerät bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Sämaschine umfasst einen Hauptrahmen und zwei Flügelrahmen. In ihrer Arbeitskonfiguration erstreckt sich die Sämaschine quer zur Vorwärtsfahrtrichtung. In der Transportposition sind die Flügelrahmen eingefaltet, insbesondere nach vorn; es wäre aber auch denkbar sie nach hinten oder oben zu falten. Alle drei Rahmen sind mit Pflanzeinheiten ausgestattet, die eine vordere Reihe mit Pflanzeinheiten und eine hintere Reihe mit Pflanzeinheiten bilden und untereinander seitlich versetzt sind. Die hinteren Reihen der Pflanzeinheiten sind an den Flügelrahmen durch Schwenkarme angelenkt, die sich von den Flügelrahmen in der Regel nach unten und hinten erstrecken. Die Schwenkarme haben eine Arbeitsposition, in der die Pflanzeinheiten in ihrer Arbeitsposition sind, und eine Transportposition, in der die Pflanzeinheiten auf ihren Nasen in ihre im Wesentlichen vertikale Transportposition verschwenkt sind. Durch das Drehen der Pflanzeinheiten an den Flügelrahmen auf ihre Nasen wird die Transportbreite der Sämaschine vermindert. Die Schwenkarme ermöglichen es weiterhin, die Pflanzeinheiten in eine Zwischenposition zu verbringen, in der sie sich nicht mehr im Bodenkontakt befinden. Diese mittlere Nicht-Arbeitsposition ermöglicht ein Säen mit einem größeren Reihenabstand, da jede zweite Pflanzeinheit deaktiviert ist.

Die Schwenkarme können durch eine Schwenkwelle an den Flügelrahmen schwenkbar befestigt sein, die mit einem Schwenkhebel verbunden ist. Ein linearer Aktor, insbesondere ein hydraulischer oder pneumatischer Zylinder, bewegt den Schwenkhebel, der wiederum den Schwenkhebel verschwenkt.

In einer bevorzugten Ausführungsform ist der Hauptrahmen mit Bodenrädern ausgestattet, die sich im Eingriff mit dem Erdboden befinden und angehoben und abgesenkt werden, um den Hauptrahmen gegenüber dem Boden vertikal zu bewegen. Die vertikale Position des Hauptrahmens definiert seine Arbeitskonfiguration und seine Transportkonfiguration. Wenn sich die Bodenräder in ihrer angehobenen Position befinden, ist der Hauptrahmen in seine Arbeitsposition abgesenkt, während der Hauptrahmen in seine Transportkonfiguration angehoben ist, wenn die Bodenräder sich in ihrer abgesenkten Position befinden.

Auch die linken und rechten Flügelrahmen können mit Bodenrädern ausgestattet sein, die sich im Eingriff mit dem Erdboden befinden. Wenn sich die Bodenräder der Flügelrahmen in ihrer abgesenkten Position befinden, sind die Flügelrahmen in ihrer Arbeitskonfiguration. Wenn die Bodenräder der Flügelrahmen sich in ihrer angehobenen Position befinden, sind die Flügelrahmen in ihrer Transportkonfiguration.

In der Zeichnung ist ein nachfolgend näher beschriebenes Ausführungsbeispiel der Erfindung dargestellt. Es zeigt:
- Fig. 1: eine Seitenansicht einer erfindungsgemäßen Sämaschine in ihrer Arbeitskonfiguration,

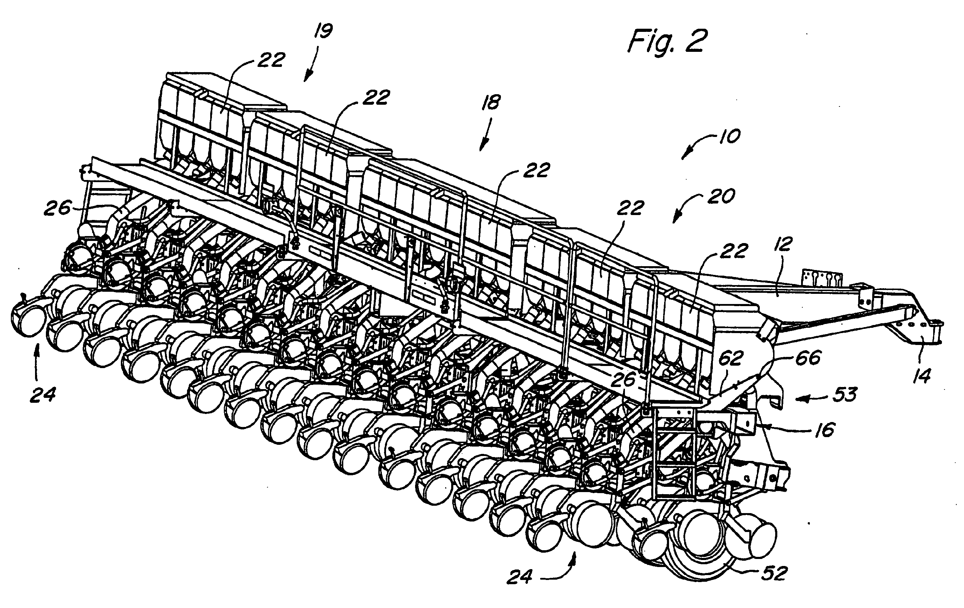

- Fig. 2: eine rückwärtige perspektivische Ansicht einer erfindungsgemäßen Sämaschine mit angehobenen Pflanzeinheiten,
- Fig. 3: eine rückwärtige perspektivische Ansicht einer erfindungsgemäßen Sämaschine in ihrer Transportkonfiguration,

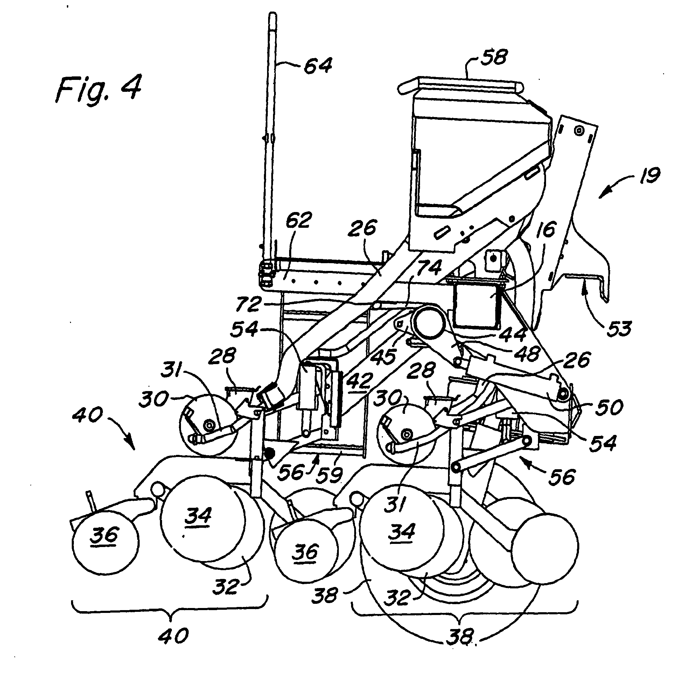

- Fig. 4: eine Seitenansicht eines Flügelrahmensegments der in Figur 2 dargestellten Sämaschine von links,
- Fig. 5: eine Seitenansicht eines Flügelrahmensegments der in Figur 3 dargestellten Sämaschine von links,
- Fig. 6: eine Seitenansicht eines Flügelrahmensegments einer erfindungsgemäßen Sämaschine von rechts, wobei die hintere Reihe der Pflanzeinheiten sich in ihrer mittleren Halteposition befindet,
- Fig. 7: einen teilweisen Querschnitt entlang der Linien 7-7 der Figur 6,
- Fig. 8: eine perspektivische Ansicht einer Reihe von Saatgutbehältern einer erfindungsgemäßen Sämaschine,
- Fig. 9: eine Explosionsansicht der Reihe von Saatgutbehältern aus Figur 8 mit dem abnehmbaren Deckel, und
- Fig. 10: eine perspektivische Querschnittsansicht der Reihe an Saatgutbehältern.

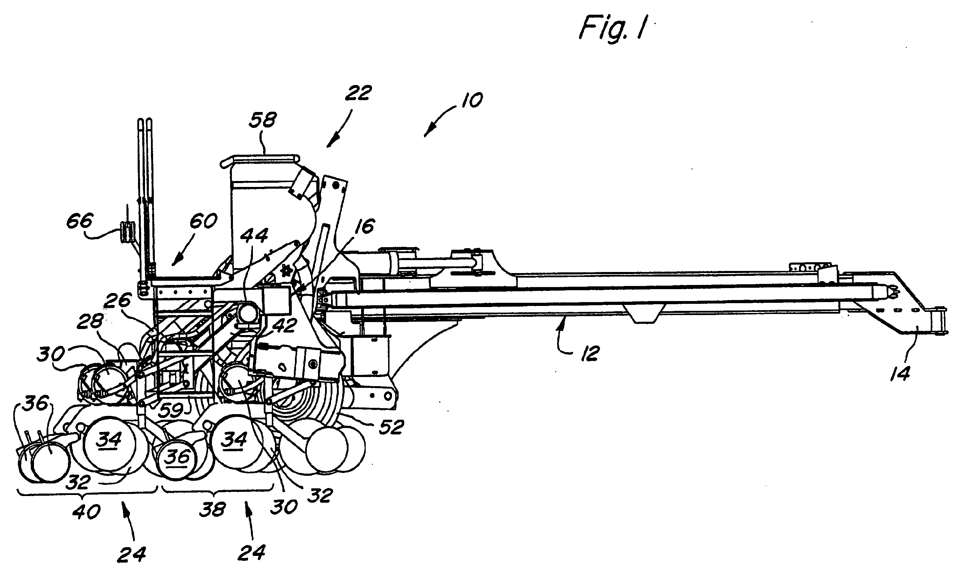

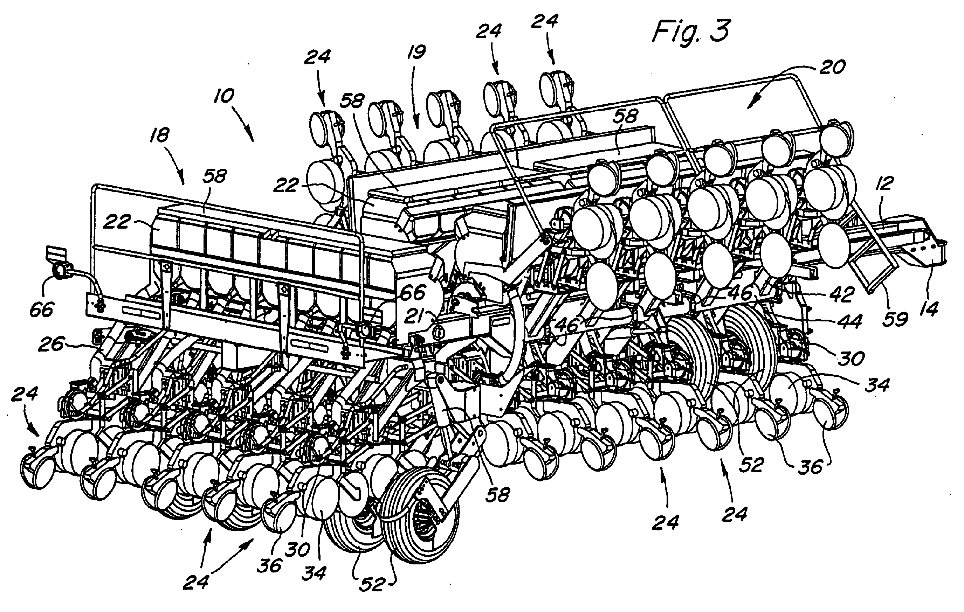

Figur 1 ist eine Seitenansicht eines gezogenen landwirtschaftlichen Arbeitsgeräts in Form einer Sämaschine 10. Die Sämaschine 10 ist durch eine Deichsel 12 oder einen Zugbalken mit einer Kupplung 14 an einen Traktor gekoppelt. Die Deichsel 12 erstreckt sich von einem Rahmen 16 nach vorn. Der Rahmen 16 umfasst drei Rahmensegmente, einen Hauptrahmen 18 sowie einen linken und einen rechten Flügelrahmen 19 und 20. Die Flügelrahmen 19 und 20 können gegenüber dem Hauptrahmen 18 um linke und rechte, sich von vorn nach hinten erstreckende Schwenklager 21 verschwenkt werden. Diese sich von vorn nach hinten erstreckenden Schwenklager 21 erlauben es den Flügelrahmen 19 und 20, besser der Kontur des Bodens zu folgen, wenn die Sämaschine 10 über ein Feld gezogen wird. Die Flügelrahmen 19 und 20 können auch um sich vertikal erstreckende Schwenklager nach vorn gefaltet werden, so dass die Sämaschine 10 dann die in Figur 3 gezeigte Transportkonfiguration annimmt.

Jedes der Rahmensegmente 18, 19 und 20 ist mit Reihen von Saatgutbehältern 22 ausgestattet. Die Reihen von Saatgutbehältern 22 führen Saatgut durch flexible Rohre 26 einzelnen Pflanzeinheiten 24 zu. In der dargestellten Ausführungsform umfasst jede Pflanzeinheit 24 einen zusätzlichen Behälter 28, ein Messsystem 30, einen Furchenöffner 32, Tiefeneinstellräder 34 und Furchenschließräder 36. Saatgut wird durch das flexible Rohr 26 in die zusätzlichen Behälter 28 geleitet. Das Saatgut wird dann durch das Messsystem 30 abgemessen. Bei der dargestellten Ausführungsform ist das Messsystem 30 ein Vakuummesssystem, das an einer Vakuumleitung 31 angeschlossen ist. Das abgemessene Saatgut wird dann einem nicht dargestellten Saatgutrohr zugeführt, welche das Saatgut in die vom Furchenöffner 32 geformte Pflanzfurche leitet. Die Pflanzfurche wird dann durch die Furchenschließräder 36 geschlossen, die das Saatgut in der geschlossenen Pflanzfurche einschließen.

Die Pflanzeinheiten 24 sind an jedem Rahmensegment 18, 19 und 20 in einer vorderen Reihe 38 und einer hinteren Reihe 40 angeordnet. Die vorderen Reihen 38 der Pflanzeinheiten 24 sind direkt an den Rahmensegmenten 18, 19 und 20 befestigt, so dass die vorderen Reihen 38 sich mit dem jeweiligen Rahmensegment bewegen. In ähnlicher Weise ist die hintere Reihe 40 der Pflanzeinheiten 24 des Hauptrahmens am Hauptrahmensegment 18 befestigt, so dass sie sich mit dem Hauptrahmensegment 18 bewegen. Alle Pflanzeinheiten 24 des Hauptrahmens 18, die die hintere Reihe 40 bilden, sind mit individuellen Verschlüssen ausgestattet, um die Pflanzeinheiten aus der Bodenberührung heraus nach oben zu verschwenken, wenn sie in ihrer Nicht-Pflanzposition sind. Die hinteren Reihen 40 der an den Flügelrahmensegmenten 19 und 20 befestigten Pflanzeinheiten 24 sind an Schwenkarmen 42 befestigt, die sich von einer Schwenkwelle 44 nach unten und hinten erstrecken. Die Schwenkwelle 44 ist durch Lagerungen 46 drehbar mit dem Flügelrahmensegment 20 drehbar gekoppelt. Ein Winkelhebel 48, der durch einen Linearmotor 50 angetrieben wird, dreht die Schwenkwelle 44. In der dargestellten Ausführungsform ist der Linearmotor 50 ein doppelt wirkender hydraulischer Zylinder. Die Pflanzeinheiten 24 der vorderen Reihe 38 und der hinteren Reihe 40 sind miteinander alternierend angeordnet.

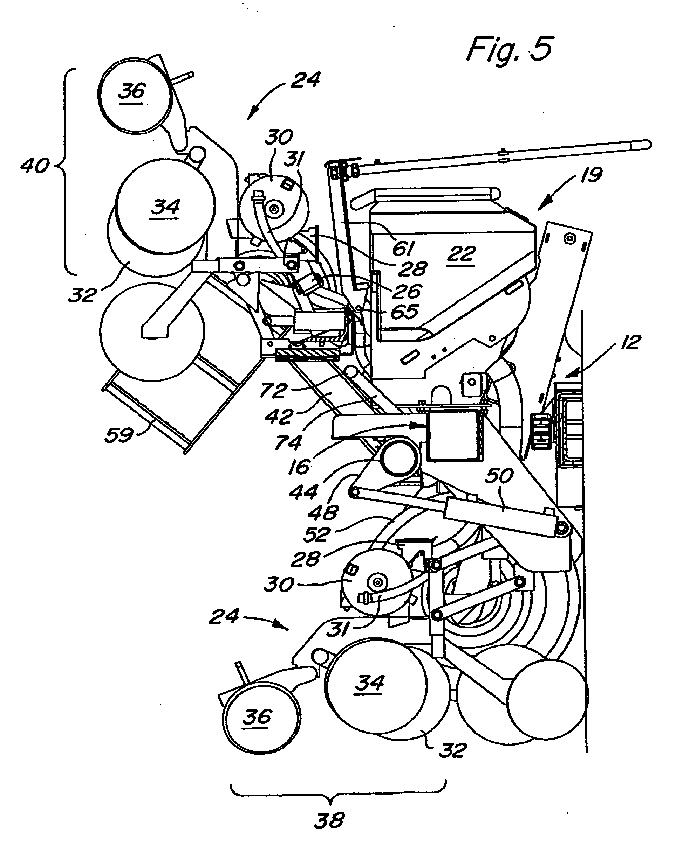

Die Schwenkarme 42 können durch die Linearmotoren 50, die die jeweiligen Winkelhebel 48 der Schwenkwelle 44 antreiben, aus ihrer in Figur 1 dargestellten Arbeitsposition in ihre in den Figuren 3 und 5 dargestellte Transportposition gedreht werden. Auf diese Weise werden die hinteren Reihen 40 der Pflanzeinheiten 24 in ihre im Wesentlichen vertikalen Transportpositionen gedreht, wenn die Flügelrahmenabschnitte 19 und 20 nach vorn gedreht sind, wie in den Figuren 3 und 5 gezeigt, was die Sämaschine 10 mit einer kleineren Transportbreite ausstattet. Die Schwenkwelle 44 ist mit angetriebenen Schwenkhebeln 45 versehen, die Hubverbindungen 47 aufweisen.

Die Rahmensegmente 18, 19 und 20 sind mit Bodenrädern 52 ausgestattet. Die Bodenräder 52 berühren den Boden, wenn die Sämaschine 10 in ihrer Arbeitskonfiguration ist. Nach unten gerichteter Druck wird durch einen pneumatischen Niederdrückzylinder 54 auf jede Pflanzeinheit 24 ausgeübt. Der pneumatische Niederdrückzylinder 54 erstreckt sich jeweils zwischen dem Hauptrahmensegment 18 und den Flügelrahmensegmenten 19 und 20 einerseits und den hinteren Reihen 40 der Pflanzeinheiten 24 andererseits. Für die hintere Reihe 40 der Pflanzeinheiten 24 an den Flügelrahmensegmenten 19 und 20 erstreckt sich der pneumatische Niederdrückzylinder 54 zwischen dem Schwenkarm 42 und den Pflanzeinheiten 24. Die pneumatischen Niederdrückzylinder 54 greifen an einer Parallelogrammführung 56 an, die die Pflanzeinheiten 24 mit den jeweiligen Rahmensegmenten 19 und 20 und den Schwenkarmen 42 verbindet. Die Parallelogrammführung 56 erlaubt den Pflanzeinheiten 24, dem Boden gegenüber den Rahmensegmenten 18, 19 und 20 und den Schwenkarmen 42 zu folgen.

Wenn die Sämaschine 10 von ihrer Arbeitskonfiguration in ihre Transportkonfiguration bewegt wird, werden die Bodenräder 52 des Hauptrahmensegments 18 durch hydraulische Zylinder 58 ausgefahren, so dass der Rahmen 16 angehoben wird. Die Flügelrahmensegmente 19 und 20 werden nach vorn verschenkt, bis sie mit Sperrhaken 53 an der Deichsel 12 angreifen. Die Linearmotoren 50 werden ausgestreckt, so dass die Schwenkwellen 44 mittels der Winkelhebel 48 verschwenkt werden. Auf diese Weise werden die Schwenkarme 42 und die daran angebrachten Pflanzeinheiten 24 aus ihrer Arbeitsposition in ihre Transportposition gedreht.

Die Saatgutbehälter 22 sind mit Zugangsdeckeln 58 ausgestattet, um den Innenraum der Saatgutbehälter 22 zugänglich zu machen. Um die Saatgutbehälter 22 zu füllen, steigt der Bediener über Stufen 59 auf den Laufsteg 60 für den Bediener und öffnet die Zugangsdeckel 58. Der Laufsteg 60 ist oberhalb der Reiheneinheiten 24 angeordnet, wenn sie sich in ihrer Arbeitsposition befinden. Der Laufsteg 60 umfasst eine Fußplatte 61 und einen Laufstegrahmen 62. Der Laufstegrahmen 62 ist mit Relingen 64 und Warnlichtern 66 ausgestattet. Die Fußplatte 61 an jedem der Flügelrahmensegmente 19, 20 ist durch einen Fußplattenstift 65 schwenkbar mit einem Laufstegrahmen 62 verbunden. Der Laufstegrahmen 62 ist mit den Flügelrahmensegmenten 19 und 20 durch einen Laufstegrahmenstift 66 schwenkbar verbunden. Der Laufstegrahmenstift 66 definiert eine zweite Schwenkachse, die parallel zur ersten Schwenkachse ist, die durch die Schwenkwelle 44 definiert wird. In ähnlicher Weise definiert der Fußplattenstift 65 eine dritte Schwenkachse, die parallel zur ersten und zweiten Schwenkachse ist.

Wenn sich der Linearmotor 50 ausstreckt, dreht er die Schwenkwelle 44, indem er den angetriebenen Schwenkhebel 45 dreht und die Hubverbindung 47 bewegt. Die Hubverbindung 47 ist mit dem Laufstegrahmen 62 durch einen Hubverbindungsstift 68 gekoppelt. Die Hubverbindung 47 ist mit einem Schlitz 49 für eine Leerbewegung ausgestattet. Der Schlitz 49 erlaubt es den Schwenkarmen 42, einen begrenzten Betrag angehoben zu werden, bevor der Laufstegrahmen 62 gegenüber den Flügelrahmensegmenten 19 und 20 verschwenkt wird. Wenn die Hubverbindung 47 am Laufstegrahmen 62 angreift, werden der Laufstegrahmen 62 und die Fußplatte 61 um die Laufstegschwenkachse (zweite Schwenkachse) verschwenkt, welche durch den Laufstegrahmenstift 66 definiert wird. Eine weitere Drehung der Schwenkwelle 44 bedingt, dass die hinteren Reihen 40 der Pflanzeinheiten 24 für die Flügelrahmensegmente 19 und 20 an den Fußplatten 61 anschlagen. An den Pflanzeinheiten 24 befestigte Puffer 70 greifen an der Unterseite der Fußplatte 61 an. Die Puffer 70 schwenken die Fußplatte 61 selbsttätig um die Fußplattenschwenkachse (dritte Schwenkachse), die durch den Fußplattenstift 65 definiert wird, gegenüber dem Laufstegrahmen 62. In ihrer endgültigen Transportposition sind die Fußplatten 61 in der Art eines Sandwichs zwischen den Saatgutbehältern 22 und den hinteren Reihen 40 der Pflanzeinheiten 24 der Flügelrahmensegmente 19, 20 angeordnet.

Sich quer erstreckende Rohrträger 72 sind durch Verbindungen 74 schwenkbar an den Flügelrahmenabschnitten 19 und 20 schwenkbar angebracht. Die Rohrträger 72 sind unterhalb den Laufstegen 60 für den Bediener angeordnet und stützen die flexiblen Rohre 26 für die hinteren Reihen 40 der Pflanzeinheiten 24 ab. Die Rohrträger 72 ruhen auf der Schwenkwelle 44, wenn sich die Sämaschine 10 in ihrer Arbeitskonfiguration befindet. Wenn die Schwenkarme 42 in ihre Transportposition geschwenkt werden, berühren die Schwenkarme 42 den Rohrträger 72, so dass die Rohrträger 72 mit den Schwenkarmen 42 angehoben werden. Die Rohrträger 72 heben die flexiblen Rohre 26 an und schützen sie vor dem Knicken, wenn die Pflanzeinheiten 24 in ihre Transportpositionen angehoben werden.

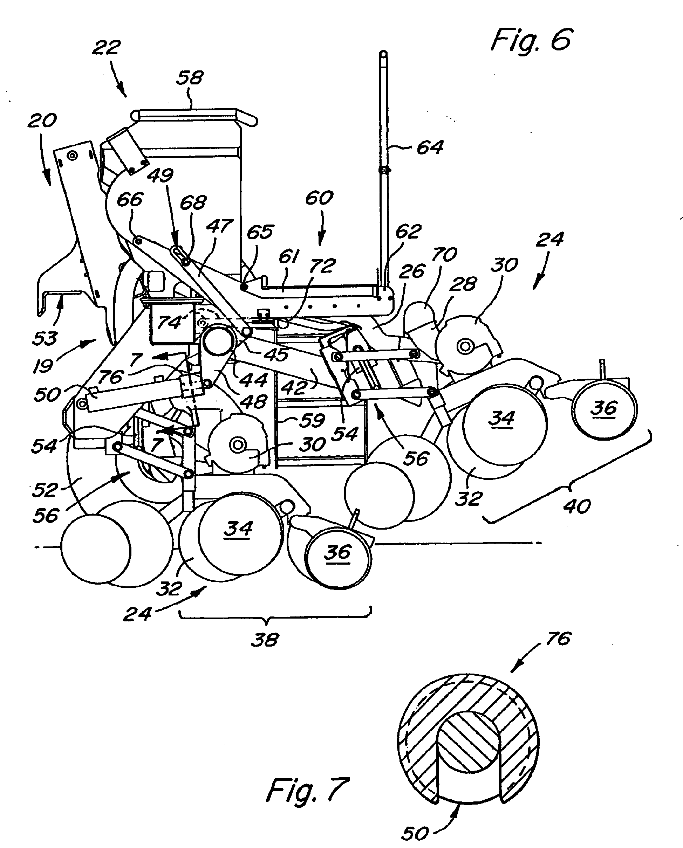

Wie in Figur 6 gezeigt, hat die Sämaschine 10 eine zweite Arbeitskonfiguration, in der die vorderen Reihen 38 der Pflanzeinheiten 24 zum Pflanzen verwendet werden und die zweiten Reihen 40 der Pflanzeinheiten 24 durch die Schwenkarme 42 in eine mittlere Halteposition nach oben verschwenkt sind. In der mittleren Halteposition befinden sich die hinteren Reihen 40 der Pflanzeinheiten 24 nicht mehr im Kontakt mit dem Boden und nur die vorderen Reihen 38 der Pflanzeinheiten 24 bringen Saatgut in den Boden ein. Auf diese Weise können die vorderen Reihen 38 der Pflanzeinheiten 24 verwendet werden, mit einem größeren Reihenabstand zu pflanzen, als wenn die hintere Reihe 40 der Pflanzeinheiten 24 genutzt würde. Wenn die hinteren Reihen 40 sich beispielsweise in ihrer mittleren Halteposition befinden, können die vorderen Reihen 38 der Pflanzeinheiten 24 verwendet werden, Mais mit Reihenabständen von 75 cm zu pflanzen. Wenn die hinteren Reihen 40 der Pflanzeinheiten 24 abgesenkt sind, kann die Sämaschine 10 genutzt werden, um Sojabohnen in Reihen mit 37,5 cm Abstand zu pflanzen. Um die hinteren Reihen 40 der Pflanzeinheiten 24 in der mittleren Halteposition zu halten, ist ein U-förmiger Anschlag 76 bereitgestellt, der über den Linearmotor 50 passt und das Einziehen des hydraulischen Zylinders verhindert.

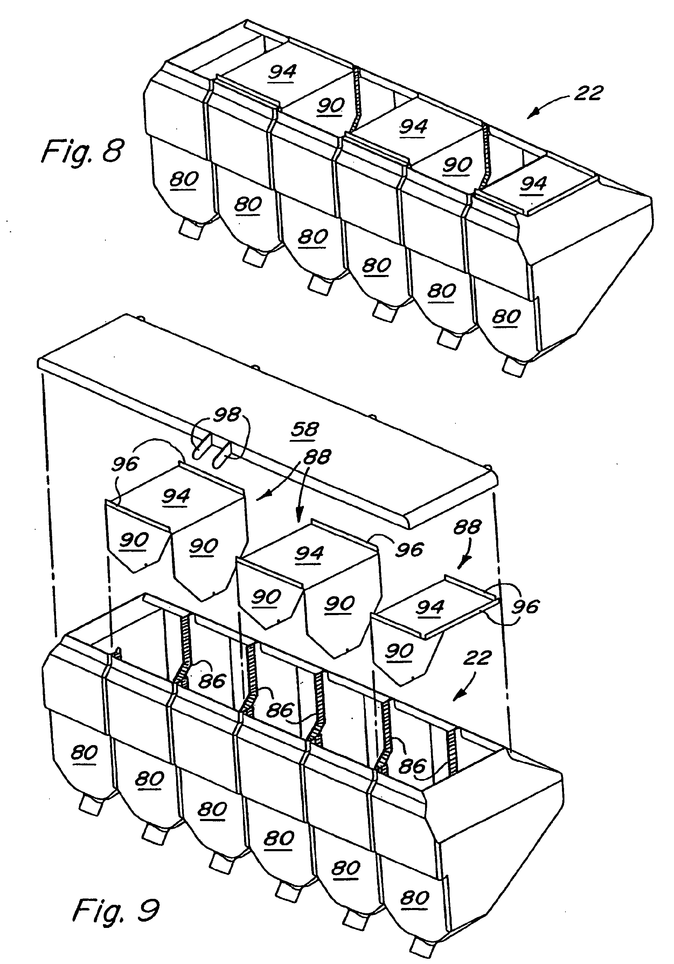

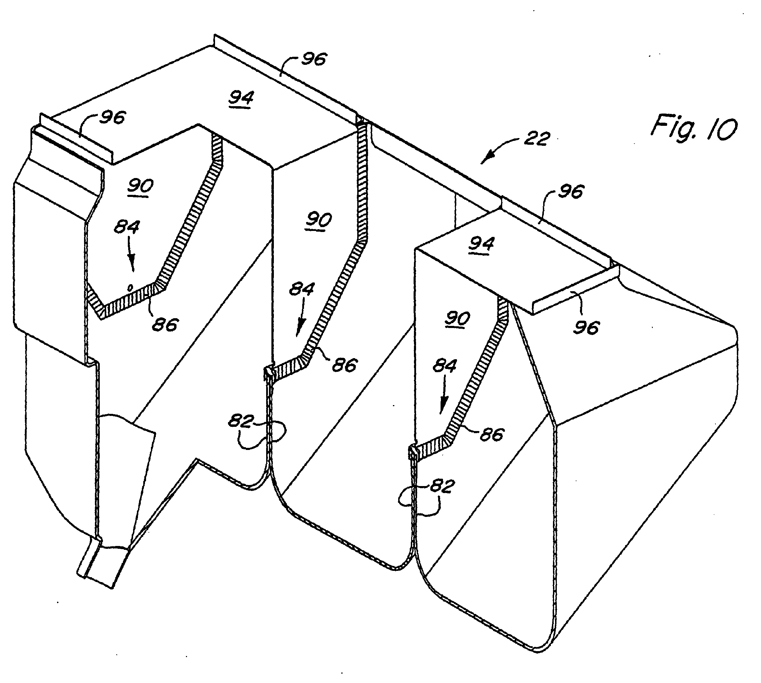

Eine Reihe an Saatgutbehältern 22 ist am Besten in den Figuren 8 bis 10 illustriert. Die Reihe an Saatgutbehältern 22 umfasst eine Reihe einzelner Behälter 80 aus Kunststoff, die aneinander angrenzende Wände 82 haben. Die aneinander angrenzenden Wände 82 sind mit Ausschnitten 84 versehen, so dass Saatgut von einem einzelnen Behälter 80 in einen anderen fließen kann, wenn sowohl die vordere Reihe 38 als auch die hintere Reihe 40 der Pflanzeinheiten 24 sich in ihrer Arbeitsstellung befindet. Die Ausschnitte 84 werden durch eine Dichtung 86 umrundet, die über die angrenzenden Wände 82 der einzelnen Behälter 80 hinausragt. Wenn die hinteren Reihen 40 in ihre mittlere Halteposition angehoben werden, wird nur die Hälfte der Pflanzeinheiten 24 genutzt, so dass alternierend einzelne Behälter 80 nichtarbeitende Pflanzeinheiten 24 versorgen. Daher ist die Reihe an Saatgutbehältern 22 mit entfernbaren Leiteinrichtungen 88 ausgestattet, die sich nach unten erstreckende Beine 90 haben, die an den angrenzenden Wänden 82 der einzelnen Behälter 80 anliegen. Die sich nach unten erstreckenden Beine 90 wirken mit den Ausschnitten 84 zusammen, um einen arbeitenden einzelnen Behälter 80 gegenüber dem angrenzenden nicht-arbeitenden einzelnen Behälter 80 abzudichten. Die Beine 90 sind mit einer horizontalen Abdeckung 94 ausgestattet, die verhindert, dass Saatgut in dem nicht-arbeitenden Behälter 80 abgelegt wird. Es ist anzumerken, dass es zwei Typen von Leiteinrichtungen 88 gibt: die am weitesten rechts angeordnete Leiteinrichtung 88 in den Figuren 8 bis 10 dichtet einen Endbehälter 80 ab, und die anderen beiden illustrierten Leiteinrichtungen 88 dichten nichtarbeitende Behälter 80 ab, die zwischen arbeitenden Behältern 80 angeordnet sind. Die Leiteinrichtung 88 für den Endbehälter 80 ist mit einem sich nach unten erstreckenden Bein 90 ausgestattet, während die anderen beiden Leiteinrichtungen 88 mit zwei sich nach unten erstreckenden Beinen 90 versehen sind. Die Abdeckungen 94 der Leiteinrichtungen 88 sind mit sich nach oben erstreckenden Lippen 96 ausgestattet. Die sich nach oben erstreckenden Lippen 96 greifen an der ausgesparten Unterseite des Zugangsdeckels 58 an, um die Position der Leiteinrichtungen 88 gegenüber den einzelnen Behältern 80 besser zu fixieren. Der Zugangsdeckel 58 ist durch Scharnierarme 98 schwenkbar an den Rahmensegmenten 18, 19 und 20 befestigt.

Es wäre denkbar, ein mechanisches Messsystem oder ein pneumatisches, mit Überdruck arbeitendes Messsystem an Stelle des in der obigen Beschreibung offenbarten Vakuummesssystems zu verwenden. Dass Saatgut könnte den Behältern 80 der einzelnen Pflanzeinheiten 24 durch ein System auf Anfrage von einem zentralen Behälter zugeführt werden, anstelle der Verwendung des in der obigen Beschreibung offenbarten, mit der Schwerkraft arbeitenden Systems.

## Patentansprüche

1. Sämaschine (10) mit einem Hauptrahmen (18), der eine vordere Reihe (38) und eine hintere Reihe (40) an Pflanzeinheiten (24) umfasst, einem linken Flügelrahmen (19) sowie einem rechten Flügelrahmen (20), die schwenkbar mit dem Hauptrahmen (18) verbunden sind, so dass sie von einer Arbeitskonfiguration in eine Transportkonfiguration verschwenkbar sind, und einem Saatgutbehälter (22) zur Aufnahme von Saatgut, wobei die Flügelrahmen (19, 20) mit einer vorderen Reihe (38) und einer hinteren Reihe (40) an Pflanzeinheiten (24) ausgestattet sind, **dadurch gekennzeichnet, dass** an den linken und rechten Flügelrahmen (19, 20) Schwenkarme (42) schwenkbar gelagert sind, dass die hintere Reihe (40) der Pflanzeinheiten (24) der linken und rechten Flügelrahmen (19, 20) an den Schwenkarmen (42) befestigt sind, während die vorderen Reihe (38) der Pflanzeinheiten (24) der linken und rechten Flügelrahmen (19, 20) direkt an den Flügelrahmen (19, 20) befestigt ist, wobei die Schwenkarme (42) zwischen einer Arbeitsposition, in der die Pflanzeinheiten (24) sich im Bodenkontakt befinden, einer mittleren Nicht-Arbeitsposition, in der die Pflanzeinheiten angehoben sind und keinen Bodenkontakt haben, und einer Transportposition beweglich sind, in der die Pflanzeinheiten (24) über ihre mittlere Nicht-Arbeitsposition hinaus in eine vertikale Transportposition angehoben sind, und dass die Schwenkarme (42) bei in ihre Transportkonfiguration verbrachten Flügelrahmen (19, 20) in ihre Transportposition anhebbar sind.

2. Sämaschine (10) nach Anspruch 1, **dadurch gekennzeichnet, dass** ein erstes Ende der Schwenkarme (42) schwenkbar am jeweiligen Flügelrahmen (19, 20) befestigt ist, und dass die hintere Reihe (40) der Pflanzeinheiten (40) an den anderen, zweiten Enden der Schwenkarme (42) befestigt sind.

3. Sämaschine nach Anspruch 1 oder 2, **dadurch gekennzeichnet, dass** sich je ein flexibles Rohr (26) zwischen dem Saatgutbehälter (22) und den Pflanzeinheiten (24) erstreckt, um ihnen Saatgut zuzuführen.

4. Sämaschine nach einem der Ansprüche 1 bis 3, **gekennzeichnet durch** eine sich nach vorn erstreckende Deichsel (12) mit einer Kupplung (14) zum Ankoppeln der Sämaschine (10) an einen Traktor.

5. Sämaschine nach Anspruch 4, **dadurch gekennzeichnet, dass** die linken und rechten Flügelrahmen (19, 20) aus ihrer Arbeitskonfiguration nach vorn in ihre Transportkonfiguration verbringbar sind, in der sie sich entlang der Seite der Deichsel (12) erstrecken.

6. Sämaschine nach einem der vorhergehenden Ansprüche, **dadurch gekennzeichnet, dass** die Schwenkarme (42) durch linke und rechte, mit Schwenkhebeln (45) verbundene Schwenkwellen (44) mit den linken und rechten Flügelrahmen (19, 20) gekoppelt sind, wobei sich ein Linearmotor (50), insbesondere ein hydraulischer Zylinder, zwischen dem Flügelrahmen (19, 20) und dem Schwenkhebel (45) erstreckt, um die Schwenkwelle (44) gegenüber dem Flügelrahmen (19, 20) zu drehen und **dadurch** den Schwenkarm (42) zu schwenken.

7. Sämaschine nach einem der vorhergehenden Ansprüche, **dadurch gekennzeichnet, dass** die Pflanzeinheiten (24) des Hauptrahmens (18) und/oder der Flügelrahmen (19, 20) durch Parallelogrammführungen (56) mit dem Hauptrahmen (18) und/oder dem Flügelrahmen (19, 20) verbunden sind, so dass die Pflanzeinheiten (24) der Kontur des Bodens unabhängig folgen.

8. Sämaschine nach einem der vorhergehenden Ansprüche, **dadurch gekennzeichnet, dass** die Flügelrahmen (19, 20) durch Schwenklager (21) mit sich in Fahrtrichtung erstreckenden Schwenkachsen schwenkbar am Hauptrahmen (18) angelenkt sind.

9. Sämaschine nach einem der vorhergehenden Ansprüche, **dadurch gekennzeichnet, dass** der Hauptrahmen (18) mit gegenüber dem Hauptrahmen (18) anheb- und absenkbaren Bodenrädern (52) ausgestattet ist, die die Arbeitskonfiguration und die Transportkonfiguration des Hauptrahmens (18) definieren, wobei der Hauptrahmen (18) in seine Transportkonfiguration angehoben wird, wenn die Bodenräder (52) abgesenkt werden und der Hauptrahmen (18) in seine Arbeitskonfiguration abgesenkt wird, wenn die Bodenräder (52) angehoben werden.

10. Sämaschine nach Anspruch 9, **dadurch gekennzeichnet, dass** der linke und rechte Flügelrahmen (19, 20) jeweils mit einem Bodenrad (52) ausgestattet sind, die gegenüber dem jeweiligen Flügelrahmen (19, 20) angehoben und abgesenkt werden, wobei die Bodenräder (52) die Arbeitskonfiguration und die Transportkonfiguration der Flügelrahmen (19, 20) definieren und die Flügelrahmen (19, 20) in ihrer Arbeitskonfiguration auf dem Boden abgestützt werden, wenn die Bodenräder (52) abgesenkt werden und die Flügelrahmen (19, 20) nach vorn in ihre Transportkonfiguration gefaltet werden, wenn die Bodenräder (52) angehoben werden.

## Claims

1. Sowing machine (10), having a main frame (18) comprising a front row (38) and a back row (40) of planting units (24), having a left wing frame (19) and a right wing frame (20), which are pivotably connected to the main frame (18) so that they can be swivelled from a working configuration into a transport configuration, and having a seed container (22) for the reception of seed, the wing frames (19, 20) being equipped with a front row (38) and a back row (40) of planting units (24), **characterized in that** swivel arms (42) are pivotably mounted on the left and right wing frames (19, 20), **in that** the back row (40) of planting units (24) of the left and right wing frames (19, 20) are fastened to the swivel arms (42), whilst the front row (38) of planting units (24) of the left and right wing frames (19, 20) are fastened directly to the wing frames (19, 20), the swivel arms (42) being movable between a working position, in which the planting units (24) are in contact with the ground, a middle, non-working position, in which the planting units are raised and have no contact with the ground, and a transport position, in which the planting units (24) are raised beyond their middle, non-working position into a vertical transport position, and **in that** the swivel arms (42), when the wing frames (19, 20) are moved into their transport configuration, can be raised into their transport position.

2. Sowing machine (10) according to Claim 1, **characterized in that** a first end of the swivel arms (42) is pivotably fastened to the respective wing frame (19, 20), and **in that** the back row (40) of planting units (24) is fastened to the other, second ends of the swivel arms (42).

3. Sowing machine according to Claim 1 or 2, **characterized in that** a flexible tube (26) in each case extends between the seed container (22) and the planting units (24) in order to supply them with seed.

4. Sowing machine according to one of Claims 1 to 3, **characterized by** a forward-extending drawbar (12) having a coupling (14) for coupling the sowing machine (10) to a tractor.

5. Sowing machine according to Claim 4, **characterized in that** the left and right wing frames (19, 20) can be moved out of their working configuration forwards into their transport configuration, in which they extend along the side of the drawbar (12).

6. Sowing machine according to one of the preceding claims, **characterized in that** the swivel arms (42) are coupled to the left and right wing frames (19, 20) by left and right swivel shafts (44) connected to swivel levers (45), a linear motor (50), in particular a hydraulic cylinder, extending between the wing frame (19, 20) and the swivel lever (45) so as to rotate the swivel shaft (44) relative to the wing frame (19, 20) and thereby swivel the swivel arm (42).

7. Sowing machine according to one of the preceding claims, **characterized in that** the planting units (24) of the main frame (18) and/or of the wing frames (19, 20) are connected to the main frame (18) and/or the wing frame (19, 20) by parallelogram linkage mechanisms (56), so that the planting units (24) independently follow the contour of the ground.

8. Sowing machine according to one of the preceding claims, **characterized in that** the wing frames (19, 20) are articulately attached to the main frame (18) by swivel bearings (21) having swivel axes extending in the direction of travel.

9. Sowing machine according to one of the preceding claims, **characterized in that** the main frame (18) is equipped with ground wheels (52) which can be raised and lowered relative to the main frame (18) and which define the working configuration and the transport configuration of the main frame (18), the main frame (18) being raised into its transport configuration whenever the ground wheels (52) are lowered, and the main frame (18) being lowered into its working configuration whenever the ground wheels (52) are raised.

10. Sowing machine according to Claim 9, **characterized in that** the left and right wing frame (19, 20) are respectively equipped with a ground wheel (52), which ground wheels are raised and lowered relative to the respective wing frame (19, 20), the ground wheels (52) defining the working configuration and the transport configuration of the wing frames (19, 20) and the wing frames (19, 20), in their working configuration, being supported on the ground whenever the ground wheels (52) are lowered, and the wing frames (19, 20) being folded forwards into their transport configuration whenever the ground wheels (52) are raised.

## Revendications

1. Semoir (10) comprenant un cadre principal (18), qui comporte une rangée avant (38) et une rangée arrière (40) des unités de plantation (24), un cadre latéral gauche (19) et un cadre latéral droit (20), qui sont reliés de façon pivotante au cadre principal (18), de sorte qu'ils peuvent basculer d'une configuration de travail dans une configuration de transport, et un récipient à semence (22) pour la réception de semence, les cadres latéraux (19, 20) étant équipés d'une rangée (38) avant et d'une rangée (40) arrière d'unités de plantation (24), **caractérisé en ce que** des bras pivotants (42) sont fixés de façon pivotante sur les cadres latéraux (19, 20) gauches et droits, **en ce que** la rangée arrière (40) des unités de plantation (24) des cadres latéraux (19, 20) gauches et droits sont fixés sur les bras pivotants (42) alors que la rangée avant (38) des unités de plantation (24) des cadres latéraux (19, 20) gauches et droits est fixée directement sur les cadres latéraux (19, 20), les bras pivotants (42) pouvant être déplacés entre une position de travail, dans laquelle les unités de plantation (24) se trouvent en contact avec le sol, une position de non-travail centrale, dans laquelle les unités de plantation sont soulevées et donc n'ont pas de contact avec le sol, et une autre position de transport, dans laquelle les unités de plantation (24) sont soulevées au-delà de leur position de non-travail centrale dans une position de transport verticale, et **en ce que** les bras pivotants (42) peuvent être soulevés dans leur position de transport dans le cas de cadres latéraux (19, 20) amenés dans leur configuration de transport.

2. Semoir (10) selon la revendication 1, **caractérisé en ce qu'**une première extrémité des bras pivotants (42) est fixée de façon pivotante sur le cadre latéral (19, 20) concerné, et **en ce que** la rangée arrière (40) des unités de plantation (24) est fixée sur les autres secondes extrémités de bras pivotants (42).

3. Semoir selon la revendication 1 ou 2, **caractérisé en ce qu'**un tuyau (26) flexible s'étend entre le récipient à semence (22) et les unités de plantation (24), afin de leur amener de la semence.

4. Semoir selon l'une quelconque des revendications 1 à 3, **caractérisé par** un timon (12) s'étendant vers l'avant avec un accouplement (14) pour l'accouplement du semoir (10) à un tracteur.

5. Semoir selon la revendication 4, **caractérisé en ce que** les cadres latéraux (19, 20) gauches et droits peuvent être amenés de leur configuration de travail vers l'avant dans leur configuration de transport, dans laquelle ils s'étendent le long du côté du timon (12).

6. Semoir selon l'une quelconque des revendications précédentes, **caractérisé en ce que** les bras pivotants (42) sont couplés par des arbres pivotants (44) gauches et droits, reliés à des leviers pivotants (45), aux cadres latéraux (19, 20) gauches et droits, un moteur linéaire (50), en particulier un vérin hydraulique, s'étendant entre le cadre latéral (19, 20) et le levier pivotant (45), afin de faire tourner l'arbre pivotant (44) par rapport au cadre latéral (19, 20) et de basculer ainsi le bras pivotant (42).

7. Semoir selon l'une quelconque des revendications précédentes, **caractérisé en ce que** les unités de plantation (24) du cadre principal (18) et/ou des cadres latéraux (19, 20) sont reliées par des guides à parallélogramme (56) au cadre principal (18) et/ou au cadre latéral (19, 20), de sorte que les unités de plantation (24) suivent indépendamment le contour du sol.

8. Semoir selon l'une quelconque des revendications précédentes, **caractérisé en ce que** les cadres latéraux (19, 20) sont articulés par des paliers pivotants (21) avec des axes de pivotement s'étendant dans le sens de marche de façon pivotante sur le cadre principal (18).

9. Semoir selon l'une quelconque des revendications précédentes, **caractérisé en ce que** le cadre principal (18) est équipé de roues au sol (52) pouvant se lever et s'abaisser par rapport au cadre principal (18), lesquelles roues définissent la configuration de travail et la configuration de transport du cadre principal (18), le cadre principal (18) étant soulevé dans sa configuration de transport lorsque les roues au sol (52) sont abaissées et le cadre principal (18) est abaissé dans sa configuration de travail lorsque les roues au sol (52) sont soulevées.

10. Semoir selon la revendication 9, **caractérisé en ce que** les cadres latéraux (19, 20) gauches et droits sont équipés chacun d'une roue au sol (52), qui sont soulevées et abaissées par rapport au cadre latéral (19, 20) concerné, les roues au sol (52) définissant la configuration de travail et la configuration de transport des cadres latéraux (19, 20) et les cadres latéraux (19, 20) étant soutenus dans leur configuration de travail sur le sol lorsque les roues au sol (52) sont abaissées et les cadres latéraux (19, 20) sont pliés vers l'avant dans leur configuration de transport lorsque les roues au sol (52) sont soulevées.
